# EUROPEAN PATENT SPECIFICATION

(11) **EP 0 378 892 B1**
(45) Date of publication and mention of the grant of the patent: **02.03.1994**
(21) Application number: 89300577.7
(22) Date of filing: 20.01.1989
(51) Int. Cl.: C10J 3/46

(54) **Partial oxidation of sulfurcontaining solid carbonaceous fuel**
Teiloxidation eines festen schwefelhaltigen Kohlenbrennstoffes
Oxydation partielle d'un combustible carboné solide contenant du soufre

(43) Date of publication of application: 25.07.1990
(73) Proprietor: TEXACO DEVELOPMENT CORPORATION, White Plains, New York 10650 (US)
(72) Inventor: Najjar, Mitri Salim, Hopewell Junction, NY 12533 (US); Corbeels, Roger Jean, Wappingers Falls, N.Y. 12590 (US)
(74) Representative: Ben-Nathan, Laurence Albert

(56) References cited:
- DE-B- 1 184 895
- US-A- 4 547 203
- US-A- 4 774 021
- US-A- 4 776 860
- US-A- 4 778 485
- US-A- 4 801 438

## Description

This invention pertains to the simultaneous partial oxidation and desulfurization of a sulfur and silicate-containing solid carbonaceous fuel. More particularly, it pertains to a process for the partial oxidation of a sulfur and silicate-containing carbonaceous fuel for the production of gaseous mixtures comprising H₂ and CO and containing less than about 0.05 volume of H₂S and COS.

It would be highly desirable to use comparatively low-cost readily available sulfur and silicate-containing solid carbonaceous fuels such as coal, lignite, petroleum coke and mixtures thereof for the producion of gaseous mixtures comprising H₂ + CO. These gaseous mixtures are commonly known as synthesis gas, reducing gas, and fuel gas depending on the actual gaseous composition. For example synthesis gas comprises a specific H₂/CO mole ratio, reducing gas has a high reducing ratio e.g. H₂ + CO/H₂O + CO₂, and fuel gas contains supplemental CH₄ and has a relatively high heat content.

By conventional partial oxidation gasification processes, sulfur containing gases e.g. H₂S and COS in the amount of about 0.1 to 2.0 mole % are produced along with the H₂ + CO. These sulfur-containing gaseous impurities are undesirable. They corrode piping and equipment upon contact; and, they deactivate catalysts. Accordingly, raw gas streams from the reaction zone may require additional downstream gas purification in order to remove the sulfur-containing gases.

The need for means to remove a major portion of the sulfur in synthesis gas as generated by the partial oxidation process is widely recognized. In particular, removal of sulfur from synthesis gas at high temperature is of great interest. The combined-cycle thermal efficiency is improved by eliminating the need to cool the product gases prior to low-temperature acid-gas wet scrubbing. Gaseous impurities, including H₂S, COS and CO₂ are removed from raw synthesis gas by low temperature condensation and by solvent adsorption in a separate gas purification operation located downstream from the gas generator in co-assigned U.S. Patent No. 4,052,176. Further, in this process, it is necessary to cool the hot raw gas stream from a temperature of 1482°C (2700°F) to -57°C (-70°F) before the sulfur-containing gases are separated.

The object of the invention is to provide an improved partial oxidation process for producing gaseous mixtures comprising H₂ and CO and a reduced amount of sulfur-containing gases from sulfur and silicate-containing solid carbonaceous fuel, in which desulfurization takes place at a relatively high temperature.

Advantageously, the subject invention described herein employs a vertical free-flow unobstructed refractory lined generator operating in the slagging mode and in an extremely reducing atmosphere. The hot effluent gas stream is desulfurized with substantially no reduction in temperature. Further, the life of the refractory lining in the gas generator is increased. Also, iron is tied up in molten ash as iron silicates and sulfides; and substantially no elemental iron, e.g. not more than 5.0 wt. % of the slag is produced.

This invention relates to a process for the production of gaseous mixtures comprising H₂ + CO and containing a reduced amount of sulfur-containing gases e.g. H₂S + COS by the simultaneous partial oxidation and desulfurization of a sulfur and silicate-containing comminuted solid carbonaceous fuel. In addition to carbon, the solid carbonaceous fuel comprises (basis solid fuel) about 0.2 to 8.0 wt. % sulfur and about 0.1 to 30 wt. % silicate compounds including iron silicate. An improved additional gas desulfurization step in a fluidized bed located downstream from the gas generator is provided.

The fluidized bed contains a calcium-containing material and a carbon-containing material.

The invention provides a process according to Claim 1.

In a process according to the invention, a sulfur and silicate-containing solid carbonaceous fuel and a supplemental iron-containing material are reacted by partial oxidation in the reaction zone of a free-flow unobstructed down-flowing vertical refractory lined gas generator with a controlled amount of free-oxygen containing gas and a temperature moderator giving in practice, an equilibrium oxygen concentration in the gas phase in the reaction zone having a partial pressure which is less than about 1.013 x 10⁻⁸ MPa (10⁻⁷ atmosphere). The O/C atomic ratio is in the range of about 0.5 to 1.3 The H₂O/solid carbonaceous fuel weight ratio is in the range of about 0.2 to 1.0. Further, the total atoms of iron in the reaction zone is in the range of about 1.3 to 3.0 times the atoms of sulfur in the solid carbonaceous fuel plus about 0.5 to 2.0 times the atoms of silicon in the ash. The partial oxidation and desulfurization reactions take place simultaneously at a temperature which is about 1038°C (1900°F) and about 5.5°C to 56°C (10 to 100°F) above the fluid temperature of the slag which has a viscosity in the range of about 0.1 to 200 Pa.s (1.0 to 2000 poises). The pressure in the reaction zone is in the range of about 0.2 to 25 MPa (2 to 250 atmospheres). Substantially not more than 5.0 wt. % of the slag comprises elemental iron and about 70 to 99.8 wt. % of the carbon in the original solid carbonaceous fuel is converted into carbon oxides e.g. CO and CO₂. There is substantially no formation of additional calcium silicates in the reaction zone of the partial oxidation gas generator from the silicates in said solid carbonaceous fuel feed. Further, at least 30 wt.% of the sulfur in the solid carbonaceous fuel in the reaction zone is converted into iron oxysulfide particulate matter which leave the reaction zone along with the silicates of calcium in said molten slag. By definition iron oxysulfide is iron sulfide in solution with iron oxide. The iron sulfide may be present in the solution in the range of about 10 to 99 wt. % , and the remainder may comprise iron oxide. Further, the mole % H₂S+COS in the effluent gas stream from the gas generator is reduced from a mole % of about 0.10 to 2.0 to less than about 0.05 mole % by the subject process. The molten slag is entrained in the hot raw effluent gas stream comprising H₂, CO, CO₂, at least one gas selected from the group consisting of H₂O, N₂, NH₃, CH₄, H₂S, COS and A; and entrained molten slag including calcium sulfide, iron oxysulfide, and the silicates of calcium and iron.

This invention relates to the partial oxidation of sulfur and silicate-containing solid carbonaceous fuel such as coal and petroleum coke, or mixtures thereof to produce synthesis gas, reducing gas, or fuel gas which is substantially free from sulfur. More particularly, it pertains to a partial oxidation process employing an additive system for in situ capturing the sulfur from the fuel at high temperature, and to a special gasifier operating mode to maximize the effectiveness of the additive. In the case of petroleum coke feedstocks, the additive system will also help with the removal of vanadium and nickel contaminants from the gasifier.

From the point of view of thermodynamics and cost, the addition of supplemental iron-containing compounds to the partial oxidation gasifier has been found to be highly effective to capture the sulfur contained in sulfur and silicate-containing solid carbonaceous fuels. Thermodynamics favour iron, especially at low gasification temperatures, e.g. above about 1038°C (1900°F) and about 5.5°C to 56°C (10 to 100°F) above the fluid temperature of the slag. However, the synthesis gas produced must have a sufficiently low oxygen potential for iron to capture the sulfur. To produce a synthesis gas with sufficiently low oxygen potential, the following methods of feeding may be used in the subject process: (1) gas-entrained feeding of solid carbonaceous fuel particulates; and (2) liquid hydrocarbonaceous fuel, liquid CO₂ or water slurry feeding with skimming of any CO₂ or H₂O carrier. It has been found that by the subject process, a smaller amount of calcium is tied up in the silicate slag. Large amounts of the silicates of calcium adversely affect the slag viscosity, especially if elemental iron is also present.

The sulfur and silicate-containing solid carbonaceous fuel feed materials in the subject process include by definition coal e.g. anthracite, bituminous, subbituminous, lignite, coke made from coal; petroleum coke; oil shale; tar sands; pitch; and mixtures thereof. In addition to carbon, solid carbonaceous fuel comprises (basis solid fuel) about 0.2 to 8.0 wt. % of sulfur and about 0.1 to 30 wt. % of silicate compounds including iron silicate. The solid carbonaceous fuels are preferably ground to a particle size so that 100% of the material passes through an ASTM E 11-70 Sieve Designation Standard 1.4 mm (Alternative No. 14) and at least 80% passes through an ASTM E 11-70 Sieve Designation Standard 425 µm (Alternative No. 40). The moisture content of the solid carbonaceous fuel particles is in the range of about 0 to 10 wt. %, such as 2 to 5 wt. %. The feedstock may be dried when necessary.

The ground solid carbonaceous fuel is mixed with the iron-containing material. The two materials may be ground together, or separately ground and then mixed. The iron-containing material is introduced to react with the sulfur-containing materials in the reaction zone to produce iron oxysulfide thereby reducing the formation of sulfur-containing gases e.g. H₂S and COS. The iron-containing material is selected from the group consisting of elemental iron, iron compounds selected from the group consisting of oxides, carbonates, cyanides, carbonyl, chlorides, nitrates, and mixtures thereof. Iron oxide is the preferred type of iron-containing material. Further, the iron-containing portion of the supplemental iron-containing material may be a water soluble iron salt. In one embodiment, the supplemental iron-containing material is a ferro or ferri organic compound selected from the group consisting of naphthenates, oxalates, acetates, citrates, benzoates, oleates, tartrates, and mixtures thereof. The iron-containing material may be mixed with the solid carbonaceous fuel before, during or after the solid carbonaceous fuel is ground. Sufficient supplemental iron-containing materials are introduced so that the total amount of iron in the reaction zone comprising the atoms of iron in the solid fuel and the atoms of iron in the supplemental iron-containing material is in the range of about 1.3 to 3.0 times the atoms of sulfur in the solid carbonaceous fuel plus about 0.5 to 2.0 times the atoms of silicon in the ash.

The solid carbonaceous fuel in admixture with the supplemental iron-containing material is introduced into the reaction zone of a vertical refractory-lined, unobstructed, free-flow, down-flowing, noncatalytic, partial oxidation gas generator by way of a burner. Simultaneously, a stream of free-oxygen containing gas and a temperature moderator are introduced into the gas generator. Single and double annulus type burners for introducing the feedstreams into the partial oxidation gas generator are shown in coassigned U.S. Pat. Numbers 3,528,930 and 3,847,564, which are incorporated herein by reference. Typical partial oxidation gas generating processes employing gaseous and liquid CO₂-solid carbonaceous fuel feeds are shown in coassigned U.S. Pat. No. 3,976,442, and 3,976,443 respectively, and are incorporated herein by reference.

The mixture of solid carbonaceous fuel and iron-containing material may be introduced into the partial oxidation reaction zone as solid particles entrained in a gaseous medium e.g. steam, nitrogen, H₂O, CO₂, recycle synthesis gas, free-oxygen containing gas, and mixtures thereof. Alternatively, pumpable slurries of said mixture of solid carbonaceous fuel and iron-containing material in a liquid carrier comprising a liquid hydrocarbonaceous fuel water or liquid CO₂ may be introduced into the gas generator. For example, the liquid slurry may comprise 50-70 wt. % of solid carbonaceous fuel and iron-containing material and the remainder is liquid H₂O or CO₂. At least a portion of the H₂O or CO₂ may be skimmed from the H₂O or CO₂-solid fuel mixture prior to the mixture being introduced into the burner at a temperature in the range of about - 67°F. to 100°F. depending on the pressure. After skimming, the mixture of solid carbonaceous fuel, iron-containing material, and H₂O or CO₂ contains about 5 to 10, say about 10 to 20 wt.% of H₂O or CO₂ (basis weight of feed). In another embodiment, the feedstream comprises a slurry of liquid hydrocarbonaceous material, solid carbonaceous fuel, and iron-containing material.

The term liquid hydrocarbonaceous material as used herein to describe suitable liquid carriers is intended to include various materials, such a liquified petroleum gas, petroleum distillates and residues, gasoline, naphtha, kerosene, crude petroleum, asphalt, gas oil, residual oil, tar sand oil, shale oil, coal derived oil, aromatic hydrocarbon (such as benzene, toluene, xylene fractions), coal tar, cycle gas oil from fluid-catalytic-cracking operation, furfural extract of coker gas oil, methanol, ethanol and other alcohols, by-product oxygen containing liquid hydrocarbons from oxo or oxyl synthesis, and mixtures thereof.

The partial oxidation reaction takes place in the reaction zone of the gas generator at a temperature which is above about 1038°C (1900°F.) and about 5.5°C to 56°C (10° to 200°F). above the fluid temperature of the slag which has a viscosity in the range of about 0.1 to 200 Pa.s (1.0 to 2000 poises). The pressure in the reaction zone is in the range of about 0.2 to 25 MaPa (2 to 250 atmospheres), say 1 to 10 MaPa (10 to 100 atmospheres). The atoms of free-oxygen plus atoms of organically combined oxygen in the solid carbonaceous fuel per atom of carbon in the solid carbonaceous fuel (O/C atomic ratio) may be in the range of 0.5 to 1.3. The free-oxygen is intended to include air, oxygen-enriched air, i.e., greater than 21 mole % oxygen, and substantially pure oxygen, i.e. greater than 95 mole % oxygen, (the remainder comprising N₂ and rare gases). The weight ratio H₂O/solid carbonaceous fuel in the reaction zone is in the range of about 0.2 to 1.0. The free-oxygen containing gas and temperature moderator are provided in a controlled amount so that an equilibrium oxygen concentration is provided in the gas phase in the reaction zone having a partial pressure which is less than about 1.013 x 10⁻⁸ MPa (10⁻⁷ atmosphere).

The raw product gas leaving the reaction zone may have the following composition in mole percent: H₂ 8 to 60, CO 8 to 70, CO₂ 1 to 20, H₂O 1 to 40, CH₄ nil to 30, H₂S + COS less than about 0.6, N₂ nil to 85 and A nil to 2.0. Molten slag is entrained in the hot raw effluent gas stream from the reaction zone.

Substantially no elemental iron, e.g. not more than 5.0 wt. % of the slag, is produced in the reaction zone; there is substantially no formation of additional calcium silicates; and about 70 to 99.8 wt. % of the carbon in the original solid carbonaceous fuel is converted into carbon oxides e.g. CO + CO₂. About 70 to 90 volume % of the carbon oxides comprises CO. About 10 to 99 wt. % of the sulfur in the solid carbonaceous fuel in the reaction zone is converted into iron oxysulfide particulate matter which leaves the reaction zone along with the molten slag entrained in the hot raw effluent gas stream. The remainder of the sulfur is converted into the sulfur-containing gaseous products e.g. H₂S and COS. By definition, molten slag is the molten remnant of particles of the solid carbonaceous fuel which have been subjected to partial oxidation at a temperature above about 1038°C (1900°F). It substantially comprises the fused reaction products of the supplemental iron-containing material and the mineral matter found originally in the solid carbonaceous fuel. On a dry basis, the slag may comprise in wt. %: SiO₂ 10 to 50, Al₂O₃ 10 to 50, iron oxysulfide 10 to 50, calcium oxides and sulfides 5 to 70, the silicates of calcium and iron 5 to 70, and others. The slag particles in the bottom of the quench tank has a size in the range of about 0.092 to 15.24 cm (.001 to 6 inches).

In one embodiment, the hot raw effluent gas stream from the partial oxidation reaction may be cooled and cleaned by contact with a liquid hydrocarbonaceous fuel cooling and scrubbing agent in a conventional gas quench tank and/or in gas scrubbing equipment. For example, reference is made to coassigned U.S. Patent No. 4,007,018, which is incorporated herein by reference. A slurry of slag in liquid hydrocarbonaceous fuel is produced. After being steam stripped and separating H₂S; the sulfur-depleted slurry may be recycled to the front end of the process. There it is mixed with fresh sulfur and silicate containing solid carbonaceous fuel and make-up iron-containing material in the preparation of fresh feed mixture to the partial oxidation gas generator. The gaseous mixture of steam and H₂S is then sent to a conventional sulfur-recovery facility; for example, a conventional Claus unit. In this embodiment, water was avoided as the cooling and scrubbing agent for the hot raw effluent gas stream from the gas generator in order to prevent the iron oxysulfide entrained in the hot raw effluent gas stream from reacting with the water to produce unwanted H₂S in the product gas. In another embodiment, the slag is separated from the cooling and scrubbing agent by conventional methods e.g. settling, screening, and filtration. The cooling and scrubbing agent may be then recycled, and the slag may be used as fill.

If necessary, further desulfurization of the raw effluent gas stream leaving the gas quench tank or gas scrubber may take place in a fluidized bed comprising 85 to 99 wt. % of a calcium-containing material and the remainder comprising a carbon-containing material. The H₂S + COS content in the raw effluent product gas stream may be thereby reduced to less than about 0.05 mole %. The calcium -containing material is selected from the group of calcium-compounds consisting of oxides, hydroxide, carbonates, acetate, formate, hydride, nitrate, chloride, and mixtures thereof. The carbon-containing material is selected from the group consisting of carbon, coal, petroleum coke, soot, carbonaceous particles that were entrained in the raw effluent gas stream from the partial oxidation reaction zone, and mixtures thereof. The fluidized bed may be regenerated by steam stripping. The overhead steam stripped gaseous stream comprising H₂O, H₂S and COS may be sent to a conventional Claus Unit where elemental sulfur is produced.

In still another embodiment the hot raw effluent gas stream from the reaction zone is split into first and second gas streams, such as in the manner described in coassigned U. S. Patent No. 4,328,008, which is incorporated herein by reference. The first gas stream is cooled by indirect heat exchange with a coolant in a gas cooler and contains about 60 to 99.5 volume %, such as about 80 to 99 vol. % of the total hot raw effluent gas stream leaving the reaction zone of the partial oxidation gas generator. The first stream also contains less than about 10 wt. % of the entrained molten slag and particulate matter, e.g. about 0.1 to 6.0 wt. %. The second split stream of raw synthesis gas includes the remainder of the slag, particulate matter, and sulfur-containing material from the reaction zone. The first split stream of raw synthesis gas, preferably at substantially the same temperature and pressure as in the reaction zone less ordinary drops in the lines, is passed through a fluidized bed of calcium-containing material and carbon-containing material, thereby reducing the amount of sulfur-containing materials in the first split gas stream. It was unexpectedly found that the addition of a carbon-containing material to the fluidized bed was necessary in order to generate a highly reducing atmosphere in the fluidized bed. Under these reducing conditions the capture of substantially all of the remaining sulfur-containing gases in the process gas stream was effected. By means of the carbon-containing material a localized reducing atmosphere was generated around the calcium-containing absorbent material. Optionally, prior to being introduced into said fluidized bed, the first split gas stream may be cooled to a temperature in the range of about 538°C to 1204°C (1000°F to 2200°F). by indirect heat exchange. Steam may be produced thereby. The second split gas stream is passed through a pool of quench fluid contained in a quench tank. When the quench fluid is water, most of the calcium sulfide and some of the iron oxysulfide in the slag in the second gas stream react with the quench water to produce H₂S. The second split gas stream containing said supplemental H₂S leaves the quench tank and may be desulfurized. For example, the H₂S-enriched gas stream may be introduced into a conventional Claus Unit where elemental sulfur is produced. In a Claus Unit, a portion of the H₂S in the H₂S-containing gas is burned with air to produce water and SO₂. A shift reaction then occurs between SO₂ and the remainder of the H₂S to produce elemental sulfur and H₂O. The tail gas from the Claus unit is processed to a concentration of about 200 ppm of H₂S and SO₂. Since the slag remaining in the bottom of the quench tank contains a reduced amount of sulfur, the slag is less hazardous. Further, any cost to pretreat the slag prior to disposal is thereby reduced.

In another embodiment, the desulfurized first split stream of synthesis gas leaving the aforesaid calcium and carbon-containing fluidized bed is cooled and scrubbed by direct contact with water in a gas cooling and scrubbing zone. Any sulfides of calcium and iron remaining in the first split gas stream react with the water to produce supplemental H₂S. The first split gas stream containing said supplemental H₂S leaving the gas cooling and scrubbing zone is then sent to a conventional desulfurization zone where acid gases are removed, for example by a solvent absorbent.

Alternatively, the first split gas stream may be cooled by indirect heat exchange with a coolant before the gas scrubbing step. For example, the first split gas stream may be passed through a waste heat boiler to produce steam and then scrubbed with a liquid hydrocarbonaceous fuel.

In another embodiment, the hot raw gas stream produced in the free-flow unobstructed down-flowing vertical refractory lined reaction zone is discharged through a central outlet in the bottom of said reaction zone. Simultaneously, at least one stream of oxidizing gas is directed at said orifice and the hot raw gas stream passing through. By this means, at least a portion of any elemental iron in the molten slag entrained in said hot raw effluent gas stream and/or on the walls of said outlet is oxidized. The oxidizing gas may be selected from the group consisting of steam, a free-oxygen containing gas, and mixtures thereof. The free-oxygen containing gas may be selected from the group consisting of air, oxygen-enriched air i.e. greater than 21 mole % O₂, oxygen enriched nitrogen or CO₂ i.e. greater than 1 mole % O₂, and substantially pure oxygen i.e. greater than 95 mole % O₂.

## Claims

1. A process for the simultaneous partial oxidation and desulfurization of a sulfur and silicate-containing comminuted solid carbonaceous fuel comprising (basis solid fuel) about 0.2 to 8.0 wt. % sulfur and about 0.1 to 30 wt. % of silicate compounds including iron silicate and calcium silicate characterized by the steps of:
(1) reacting in the free-flow unobstructed down-flowing vertical refractory lined reaction zone of a partial oxidation gas generator a feed mixture comprising said solid carbonaceous fuel entrained in a gaseous or liquid carrier and supplemental iron-containing material with a controlled amount of free-oxygen containing gas and a temperature moderator giving in practice an equilibrium oxygen concentration in the gas phase in the reaction zone with a partial pressure which is less than about 1.013 x 10⁻⁸ MPa (10⁻⁷ atmosphere), wherein the O/C atomic ratio is in the range of about 0.5 to 1.3, the H₂O/solid carbonaceous fuel weight ratio is in the range of about 0.2 to 1.0, the total atoms of iron in the reaction zone is in the range of about 1.3 to 3.0 times the atoms of sulfur in the solid carbonaceous fuel plus about 0.5 to 2.0 times the atoms of silicon in the ash, and about 70 to 99.8 wt. % of the carbon in said solid carbonaceous fuel is converted into carbon oxides; thereby producing a raw effluent gas mixture which is discharged through a central vertical outlet in the bottom of said reaction zone, said effluent gas stream comprising H₂, CO, CO₂, at least one gas selected from the group consisting of H₂O, N₂, CH₄, and A, less than about 0.6 mole % of H₂S + COS, and entrained molten slag in admixture with iron oxysulfide particulate matter and the silicates of calcium and iron; wherein the partial oxidation and desulfurization reactions take place at a temperature which is above 1038°C(1900°F) and which is about 5.5 to 56°C (10 to 200°F) above the fluid temperature of the slag and at a pressure in the range of about 0.2 to 25 MPa (2 to 250 atmospheres); and wherein substantially not more than 5.0 wt. % of the slag comprises elemental iron; and there is substantially no formation of additional calcium silicates in the gas generator from the silicates in said solid carbonaceous fuel, and at least 30 wt. % of the sulphur in the solid carbonaceous fuel in the reaction zone is converted into said iron-oxysulfide particulate matter which leaves the reaction zone along with said molten slag; and
(2) cooling and cleaning the hot raw gas from (1), including passing at least a portion of the raw gas through a fluidized bed of calcium-containing material and a carbon-containing material thereby reducing the amount of sulfur-containing gasses therein by converting a substantial portion thereof into calcium sulfide.

2. A process according to Claim 1 wherein said sulfur and silicate-containing solid carbonaceous fuel is selected from the group consisting of coal; coke made from coal; petroleum coke; oil shale; tar sands; pitch; and mixtures thereof.

3. A process according to Claim 1 or Claim 2 wherein said supplemental iron-containing material is selected from the group consisting of elemental iron, iron compounds selected from the group consisting of oxides, carbonates, cyanides, carbonyl, chlorides, nitrates, and mixtures thereof; or the iron-containing portion of said supplemental iron-containing material is a ferro or ferri organic compound selected from the group consisting of naphthenates, oxalates, acetates, citrates, benzonates, oleates, tartrates, and mixtures thereof; or the iron-containing portion of said supplemental iron-containing material is a water soluble iron salt.

4. A process according to any one of Claims 1 to 3 wherein said mixture of solid carbonaceous fuel and supplemental iron-containing material is introduced downwardly into said reaction zone as entrained in a gaseous or liquid mixture.

5. A process according to Claim 1 wherein said mixture of solid carbonaceous fuel and supplemental iron-containing materials comprise a pumpable liquid slurry having a solids content of about 50 to 70 wt. % in a liquid carrier selected from the group consisting of liquid hydrocarbonaceous fuel, H₂O and CO₂; and when said carrier is H₂O or CO₂, prior to said mixture entering the reaction zone reducing the amount of carrier entering the gas generator to about 5 to 20 wt. % (basis weight of feed).

6. A process according to Claim 1 provided with the steps of cooling and cleaning the hot raw product gas mixture in (2) by contacting all of said hot raw product gas mixture with a liquid hydrocarbonaceous fuel cooling and scrubbing agent thereby producing a slurry comprising slag and iron oxysulfide in a liquid hydrocarbonaceous fuel.

7. A process according to Claim 6 provided with the steps of steam stripping said slurry and separating a gaseous mixture comprising steam and H₂S, and recycling the sulfur-depleted slurry to the front end of the process for use in preparation of fresh feed mixture to the partial oxidation gas generator.

8. A process according to Claim 1 provided with the steps in (2) of (i) splitting said hot raw effluent gas mixture from the reaction zone into a first gas stream containing about 85 to 99 volume % of the total hot raw effluent gas stream and less than about 10 wt. % of the entrained molten slag and particulate solids, and a second gas stream comprising the remainder of said hot raw effluent gas stream and the remainder of the molten slag and particulate matter; (ii) passing said first split gas stream from (i) through said fluidized bed of calcium-containing material and carbon-containing material; and (iii) passing said second split gas stream from (i) through a pool of quench fluid.

9. A process according to Claim 8 provided with the step of indirectly contacting the gas stream leaving the fluidized bed in (ii) with a cooling fluid in a gas cooler.

10. A process according to Claim 8 provided with the step of directly contacting the desulfurized raw stream of synthesis gas leaving the fluidized bed in (ii) with a cooling and scrubbing fluid.

11. A process according to Claim 10 wherein said cooling and scrubbing fluid is a liquid hydrocarbonaceous fuel.

12. process according to Claim 10 wherein said cooling and scrubbing fluid is water; any calcium sulfide and iron oxysulfide in said first split gas stream react with said H₂O to produce supplemental H₂S; and introducing the first split gas stream containing said supplemental H₂S into a gas desulfurization zone.

13. A process according to Claim 8 wherein said fluidized bed in (ii) comprises about 85 to 95 wt. % of a calcium-containing material selected from the group of calcium-compounds consisting of oxides, hydroxide, carbonates, acetate, formate, hydride, nitrate, chloride, and mixtures thereof; and the remainder of said fluidized bed comprises a carbon-containing material selected from the group consisting of carbon, coal, petroleum coke, carbonaceous material that was entrained in the raw effluent gas stream from the reaction zone and mixtures thereof.

14. A process according to Claim 8 wherein the quench fluid in (iii) is water contained in a quench tank, and the calcium sulfide and iron oxysulfide in said slag reacts with said quench water to produce H₂S-containing gas, and passing the H₂S enriched gas stream from said quench tank into a Claus Unit where elemental sulfur is produced.

15. A process according to Claim 8 wherein prior to step (ii), said first split gas stream is cooled to a temperature in the range of about 538 to 1095°C (1000°F to 2000°F), by indirect heat exchange.

16. A process according to Claim 1 provided with the steps of passing the hot raw effluent gas stream produced in said reaction zone through said central vertical outlet in the bottom of said reaction zone while simultaneously directing at least one stream of oxidizing gas at said orifice and the hot raw gas stream passing through thereby oxidizing at least a portion of any elemental iron in the molten slag entrained in said hot raw effluent gas stream and/or on the walls of said outlet.

## Patentansprüche

1. Ein Verfahren zur gleichzeitigen Teiloxidation und Entschwefelung eines schwefel- und silikathaltigen zerkleinerten festen Kohlenbrennstoffs, der (bezogen auf festen Brennstoff) etwa 0,2 bis 8.0 Gewichtsprozent Schwefel- und etwa 0,1 bis 30 Gewichtsprozent Silikatbestandteile einschließlich Eisensilikat und Calciumsilikat enthält,
das durch die Schritte charakterisiert ist, daß
(1) in der hindernisfreien, abwärtsgerichteten, vertikalen, feuerfest ausgemauerten Durchflußreaktionszone eines Teiloxidationsgaserzeugers ein Eintragsgemisch, das besagten festen Kohlenbrennstoff enthält, mitgeführt in einem gasförmigen oder flüssigen Träger, und zusätzliches eisenhaltiges Material mit einer kontrollierten Menge an freien Sauerstoff enthaltendem Gas und einem Temperaturmoderator reagieren, wodurch sich in der Praxis eine Gleichgewichtssauerstoffkonzentration in der Gasphase in der Reaktionszone mit einem Partialdruck von weniger als etwa 1.013 x 10⁻⁸ MPa (10⁻⁷ Atmosphären) einstellt, worin das Atomverhältnis O/C im Bereich von etwa 0,5 bis 1,3 liegt, das Gewichtsverhältnis H₂O/fester Kohlenbrennstoff im Bereich von etwa 0,2 bis 1,0 liegt, die Gesamtzahl der Eisenatome in der Reaktionszone im Bereich des etwa 1,3- bis 3,0-fachen der Anzahl der Schwefelatome in dem festen Kohlenbrennstoff plus etwa dem 0,5- bis 2,0-fachen der Anzahl der Siliciumatome in der Asche liegt und worin 70 bis 99,8 Gewichtsprozent des Kohlenstoffs in besagtem festen Kohlenbrennstoff in Kohlenoxide umgewandelt wird: wodurch ein entweichendes Rohgasgemisch hergestellt wird, das durch einen zentralen vertikalen Auslaß am untersten Teil besagter Reaktionszone entnommen wird, wobei besagter austretender Gasstrom besteht aus: H₂, CO, CO₂ zumindest einem Gas, ausgewählt aus der aus H₂O, N₂, CH₄ und A bestehenden Gruppe, weniger als etwa 0,6 Molprozent H₂S + COS und mitgerissener geschmolzener Schlacke unter Beimischung von partikulärem Material aus Eisenoxysulfid und den Silikaten von Calcium und Eisen; worin die Teiloxidations- und Entschwefelungsreaktionen bei einer Temperatur stattfinden, die oberhalb von 1038°C (1900°F) und etwa 5,5 bis 56 °C (10 bis 200°F) oberhalb der Fließtemperatur der Schlacke liegt, und bei einem Druck im Bereich von etwa 0.2 bis 25 MPa (2 bis 250 Atmosphären) und worin nicht wesentlich mehr als 5.0 Gewichtsprozent der Schlacke aus elementarem Eisen besteht und worin in dem Gaserzeuger keine wesentliche Bildung von zusätzlichen Calciumsilikaten aus den Silikaten in besagtem festen Kohlenbrennstoff stattfindet und zumindest 30 Gewichtsprozent des Schwefels in dem festen Kohlenbrennstoff in der Reaktionszone in besagtes partikuläres Material aus Eisenoxysulfid umgewandelt wird, das die Reaktionszone mit besagter geschmolzener Schlacke zusammen verläßt; und
(2) das heiße Rohgas aus (1) gekühlt und gereinigt wird, wozu das Hindurchführen zumindest eines Teils des Rohgases durch ein Fließbett aus calciumhaltigem Material und einem kohlenstoffhaltigen Material gehört, wodurch die Menge schwefelhaltiger Gase darin durch Umwandlung eines wesentlichen Teils davon in Calciumsulfid verringert wird.

2. Ein Verfahren nach Anspruch 1, wobei besagter schwefel- und silikathaltiger fester Kohlenbrennstoff aus der Gruppe ausgewählt ist, die besteht aus: Kohle, aus Kohle hergestellter Koks, Erdölkoks, Ölschiefer, Teersandmaterialien, Pech und Mischungen daraus.

3. Ein Verfahren nach Anspruch 1 oder Anspruch 2, worin besagtes zusätzliches eisenhaltiges Material aus der Gruppe ausgewählt ist, die besteht aus: elementarem Eisen, Eisenverbindungen, ausgewählt aus der aus Oxiden, Carbonaten, Cyaniden, Carbonyl, Chloriden, Nitraten und Mischungen daraus bestehenden Gruppe, oder der eisenhaltige Teil besagter zusätzlichen eisenhaltigen Materials eine organische Ferro- oder Ferriverbindung ist, ausgewählt aus der aus Naphthenaten, Oxalaten, Acetaten, Citraten, Benzoaten, Oleaten, Tartraten und Mischungen daraus bestehenden Gruppe; oder der eisenhaltige Teil besagten zusätzlichen eisenhaltigen Materials ein wasserlösliches Eisensalz ist.

4. Ein Verfahren nach irgendeinem der Ansprüche 1 bis 3, wobei besagte Mischung aus festem Kohlenbrennstoff und zusätzlichem eisenhaltigen Material, wie sie in einer gasförmigen oder flüssigen Mischung mitgeführt wird, abwärtsgerichtet in besagte Reaktionszone eingeführt wird.

5. Ein Verfahren nach Anspruch 1, worin besagte Mischung aus festem Kohlenbrennstoff und zusätzlichen eisenhaltigen Materialien aus einem pumpfähigen flüssigen Schlamm besteht, der einen Anteil an Feststoffen von etwa 50 bis 70 Gewichtsprozent aufweist, und zwar in einem flüssigen Träger, ausgewählt aus der aus flüssigen Kohlenwasserstoffbrennmaterial, H₂O und CO₂ bestehenden Gruppe; und worin, wenn besagter Träger H₂O oder CO₂ ist, die Menge an Träger, die in den Gasgenerator eintritt, auf 5 bis 20 Gewichtsprozent reduziert wird (bezogen auf das Gewicht des Eintrags), bevor besagte Mischung in die Reaktionszone eintritt.

6. Ein Verfahren nach Anspruch 1, in (2) dadurch mit den Schritten Kühlung und Reinigung des heißen produzierten Rohgasgemischs versehen, daß das gesamte besagte heiße produzierte Rohgasgemisch mit einem Kühl- und Reinigungsmittel aus flüssigem Kohlenwasserstoffbrennmaterial in Kontakt gebracht wird, wodurch ein Schlamm erzeugt wird, der aus Schlacke und Eisenoxysulfid in einem flüssigen Kohlenwasserstoffbrennmaterial besteht.

7. Ein Verfahren nach Anspruch 6, versehen mit den Schritten Wasserdampfdestillation besagten Schlamms und Trennung eines Gasgemischs, das Dampf und H₂S enthält, und Zurückführung des vom Schwefel befreiten Schlammes zum Vorderende des Verfahrens, um es zur Herstellung frischer Eintragsmischung für den Teiloxidationsgaserzeuger zu verwenden.

8. Ein Verfahren nach Anspruch 1, in (2) versehen mit den Schritten (i) Aufteilen besagten heißen aus der Reaktionszone austretenden Rohgasgemischs in einen ersten Gasstrom, der etwa 85 bis 99 Volumenprozent des gesamten heißen entweichenden Rohgasstroms und weniger als etwa 10 Gewichtsprozent der mitgeführten geschmolzenen Schlacke und der partikulären Feststoffe enthält, und einen zweiten Gasstrom, der den Rest besagten heißen entweichenden Rohgasstroms und den Rest der geschmolzenen Schlacke und des partikulären Materials enthält; (ii) Hindurchführen des ersten Teilstroms des Gases aus (i) durch besagtes Fließbett aus calciumhaltigem Material und kohlenstoffhaltigem Material; und (iii) Hindurchführen besagten zweiten Teilstroms des Gases aus (i) durch ein Becken mit Abkühlflüssigkeit.

9. Ein Verfahren nach Anspruch 8, versehen mit dem Schritt, daß der Gasstrom, der das Fließbett in (ii) verläßt, indirekt mit einer Kühlflüssigkeit in einem Gaskühler in Kontakt gebracht wird.

10. Ein Verfahren nach Anspruch 8, versehen mit dem Schritt, daß der entschwefelte Rohgastrom von Synthesegas, der das Fließbett in (ii) verläßt, direkt in Kontakt mit einer Kühl- und Reinigungsflüssigkeit gebracht wird.

11. Ein Verfahren nach Anspruch 10, worin besagte Kühl- und Reinigungsflüssigkeit ein flüssiges Kohlenwasserstoffbrennmaterial ist.

12. Ein Verfahren nach Anspruch 10, worin besagte Kühl- und Waschflüssigkeit Wasser ist; das gesamte Calciumsulfid und Eisenoxysulfid in besagtem ersten Teilstrom des Gases mit besagtem Wasser zu zusätzlichem H₂S reagieren und worin der erste Teilstrom des Gases, der besagtes zusätzliches H₂S enthält, in eine Gasentschwefelungzone eingeführt wird.

13. Ein Verfahren nach Anspruch 8, worin besagtes Fließbett in (ii) etwa 85 bis 95 Gewichtsprozent eines calciumhaltigen Materials enthält, ausgewählt aus der Gruppe von Calciumverbindungen, die besteht aus: Oxiden, Hydroxid, Carbonaten, Acetat, Formiat, Hydrid, Nitrat, Chlorid und Mischungen daraus; und der Rest besagten Fließbettes aus einem kohlenstoffhaltigem Material besteht, ausgewählt aus der Gruppe, die besteht aus: Kohlenstoff, Kohle, Erdölkoks, kohlenstoffhaltiges Material, das in dem entweichenden Rohgasstrom aus der Reaktionszone mitgeführt wird, und Mischungen daraus.

14. Ein Verfahren nach Anspruch 8, worin die Abkühlflüssigkeit in (iii) Wasser ist, das in einem Abkühltank enthalten ist, und worin das Calciumsulfid und Eisenoxysulfid in besagter Schlacke mit besagtem Abkühlwasser zu einem H₂S-haltigem Gas reagiert und der mit H₂S angereicherte Gasstrom aus besagtem Abkühltank in eine Claus-Einheit eingeleitet wird, wo elementarer Schwefel produziert wird.

15. Ein Verfahren nach Anspruch 8, worin vor Schritt (ii) besagter erster Teilstrom des Gases auf eine Temperatur im Bereich von etwa 538 bis 1095 °C (1000 bis 2000 °F) mittels indirekten Wärmeaustauschs abgekühlt wird.

16. Ein Verfahren nach Anspruch 1, versehen mit den Schritten Hindurchführen des heißen austretenden Rohgasstroms, der in besagter Reaktionszone erzeugt wird, durch besagten zentralen vertikalen Auslaß im untersten Teil besagter Reaktionszone, bei gleichzeitigem Ausrichten zumindest eines Stroms oxidierenden Gases auf besagte Auslauföffnung und den heißen Rohgasstrom, der hindurchgeleitet wird, wodurch zumindest ein Teil des gesamten elementaren Eisens in der geschmolzenen Schlacke, die von besagtem heißen austretenden Rohgasstrom mitgeführt wird, und/oder an den Wänden besagtem Auslaßes oxidiert wird .

## Revendications

1. Procédé d'oxydation partielle et de désulfuration simultanées d'un combustible solide carboné pulvérulent contenant du soufre et un silicate, comprenant (par rapport au combustible solide) environ 0,2 à 8,0% en poids de soufre et environ 0,1 à 30% en poids de composés silicates, y compris du silicate de fer et du silicate de calcium, caractérisé par les étapes qui consistent à:
(1) faire réagir, dans la zone réactionnelle verticale à double enveloppe réfractaire, à circulation descendante, non obstruée, à circulation libre, d'un générateur de gaz d'oxydation partielle, un mélange de charge comprenant ledit combustible solide carboné, entraîné dans un véhicule gazeux ou liquide et complété d'une substance contenant du fer avec une quantité contrôlée de gaz contenant de l'oxygène libre et un modérateur de température donnant, en pratique, une concentration d'oxygène à l'équilibre dans la phase gazeuse, dans la zone réactionnelle, avec une pression partielle inférieure à environ 1,013 x 10⁻⁸ MPa (10⁻⁷ atmosphère), le rapport atomique O/C étant dans la gamme d'environ 0,5 à 1,3, le rapport pondéral H₂O/combustible solide carboné étant dans la gamme d'environ 0,2 à 1,0, le nombre total d'atomes de fer dans la zone réactionnelle étant dans la gamme d'environ 1,3 à 3,0 fois plus que le nombre d'atomes de soufre dans le combustible solide carboné plus environ 0,5 à 2,0 fois plus que le nombre d'atomes de silicium dans la cendre, et environ 70 à 99,8% en poids du carbone contenu dans ledit combustible solide carboné étant transformé en oxydes de carbone; ce qui permet de produire un mélange de gaz effluents brut qui est évacué par une sortie verticale centrale située au fond de ladite zone réactionnelle, ledit courant de gaz effluent comprenant H₂, CO, CO₂, au moins un gaz choisi dans le groupe constitué par H₂O, N₂, CH₄ et A, moins d'environ 0,6% en moles de H₂S + COS, et une scorie en fusion entraînée en mélange avec une matière particulaire à base d'oxysulfure de fer et les silicates de calcium et de fer; dans lequel les réactions d'oxydation partielle et de désulfuration ont lieu à une température supérieure à 1038°C (1900°F), qui est supérieure d'environ 5,5 à 56°C (10 à 200°F) à la température de la scorie fluide et sous une pression dans la gamme d'environ 0,2 à 25 MPa (2 à 250 atmosphères); et dans lequel essentiellement pas plus de 5,0% en poids de la scorie comprend du fer élémentaire; et il ne se forme pratiquement pas de silicates de calcium supplémentaires dans le générateur de gaz à partir des silicates contenus dans ledit combustible solide carboné, et au moins 30% en poids de soufre dans le combustible solide carboné de la zone réactionnelle est transformé en ladite matière particulaire oxysulfure de fer qui quitte la zone réactionnelle avec ladite scorie en fusion; et
(2) refroidir et nettoyer le gaz brut chaud issu de (1), notamment par passage d'au moins une partie du gaz brut dans un lit fluidisé de matière contenant du calcium et de matière contenant du carbone, ce qui y réduit la quantité de gaz soufrés en en transformant une partie substantielle en sulfure de calcium.

2. Procédé selon la revendication 1, dans lequel le combustible solide carboné contenant du soufre et un silicate est choisi dans le groupe constitué par le charbon; le coke préparé à partir de charbon; le coke de pétrole; le schiste bitumineux; les sables bitumineux; la poix; et des mélanges de ceux-ci.

3. Procédé selon la revendication 1 ou 2, dans lequel ladite matière supplémentaire contenant du fer est choisie dans le groupe constitué par le fer élémentaire, les composés de fer choisis dans le groupe constitué par les oxydes, les carbonates, les cyanures, le carbonyle, les chlorures les nitrates, et des mélanges de ceux-ci; ou la partie contenant du fer de ladite matière supplémentaire contenant du fer est un composé ferro- ou ferri-organique choisi dans le groupe constitué par les naphténates, les oxalates, les acétates, les citrates, les benzoates, les oléates, les tartrates, et des mélanges de ceux-ci; ou encore la partie contenant du fer de ladite matière supplémentaire contenant du fer est un sel de fer soluble dans l'eau.

4. Procédé selon l'une quelconque des revendications 1 à 3, dans lequel ledit mélange de combustible solide carboné et de matière supplémentaire contenant du fer est introduit de haut en bas dans ladite zone réactionnelle, entraîné dans un mélange gazeux ou liquide.

5. Procédé selon la revendication 1, dans lequel ledit mélange de combustible solide carboné et de matières supplémentaires contenant du fer comprend une suspension liquide pompable possédant une teneur en matières solides d'environ 50 à 70% en poids dans un véhicule liquide choisi dans le groupe constitué par un combustible liquide hydrocarboné, H₂O et CO₂; et, lorsque ledit véhicule est H₂O ou CO₂, avant que ledit mélange pénètre dans la zone réactionnelle, réduisant la quantité de véhicule pénétrant dans le générateur de gaz à environ 5 à 20% en poids (par rapport au poids de la charge).

6. Procédé selon la revendication 1, comprenant les étapes qui consistent à refroidir et à nettoyer le mélange gazeux chaud de produit brut en (2) en mettant en contact tout ledit mélange gazeux chaud de produit brut avec un agent de refroidissement et d'épuration constitué d'un combustible liquide hydrocarboné, pour produire une suspension comprenant une scorie et de l'oxysulfure de fer dans un combustible liquide hydrocarboné.

7. Procédé selon la revendication 6, comprenant les étapes qui consistent à entraîner à la vapeur d'eau ladite suspension et à séparer un mélange gazeux comprenant de la vapeur d'eau et H₂S, et à recycler la suspension appauvrie en soufre vers l'extrémité avant du procédé pour l'utiliser dans la préparation d'un mélange de charge frais pour le générateur de gaz d'oxydation partielle.

8. Procédé selon la revendication 1, comprenant les étapes qui consistent, en (2), (i) à séparer ledit mélange de gaz effluent brut chaud issu de la zone réactionnelle en un premier courant gazeux contenant environ 85 à 99% en volume du courant total de gaz effluent brut chaud et moins d'environ 10% en poids de la scorie en fusion et des matières solides particulaires entraînées, et en un second courant gazeux comprenant le reste dudit courant de gaz effluent brut chaud et le reste de la scorie en fusion et de la matière particulaire; (ii) à faire passer ledit premier courant gazeux séparé de (i) à travers ledit lit fluidisé de matière contenant du calcium et de matière contenant du carbone; et (iii) à faire passer ledit second courant gazeux séparé de (i) à travers un bassin de fluide de trempe.

9. Procédé selon la revendication 8, comprenant l'étape qui consiste à mettre en contact indirectement le courant gazeux quittant le lit fluidisé en (ii) avec un fluide réfrigérant dans un réfrigérateur à gaz,

10. Procédé selon la revendication 8, comprenant l'étape qui consiste à mettre en contact directement le courant brut désulfuré de gaz de synthèse quittant le lit fluidisé en (ii) avec un fluide réfrigérant et épurateur.

11. Procédé selon la revendication 10, dans lequel ledit fluide réfrigérant et épurateur est un combustible liquide hydrocarboné.

12. Procédé selon la revendication 10, dans lequel ledit fluide réfrigérant et épurateur est de l'eau; n'importe quel sulfure de calcium et oxysulfure de fer dans ledit premier courant de gaz séparé réagit avec ladite H₂O pour produire un supplément de H₂S; et le premier courant de gaz séparé contenant ledit supplément de H₂S est introduit dans une zone de désulfuration des gaz.

13. Procédé selon la revendication 8, dans lequel ledit lit fluidisé de (ii) comprend environ 85 à 95% en poids d'une matière contenant du calcium, choisie dans le groupe des composés de calcium constitué des oxydes, de l'hydroxyde, des carbonates, de l'acétate, du formiate, de l'hydrure, du nitrate, du chlorure, et de mélanges de ceux-ci; et le reste dudit lit fluidisé comprend une matière contenant du carbone choisie dans le groupe constitué du carbone, du charbon, du coke de pétrole, de la matière carbonée ayant été entraînée dans le courant de gaz effluent brut issu de la zone réactionnelle, et de mélanges de ceux-ci.

14. Procédé selon la revendication 8, dans lequel le fluide de trempe (iii) est de l'eau contenue dans une cuve de trempe, et le sulfure de calcium et l'oxysulfure de fer de ladite scorie réagissent avec ladite eau de trempe pour produire un gaz contenant H₂S, et on fait passer le courant gazeux enrichi en H₂S de ladite cuve de trempe dans une Unité Claus, dans laquelle est produit du soufre élémentaire.

15. Procédé selon la revendication 8, dans lequel, avant l'étape (ii), ledit premier courant de gaz séparé est refroidi à une température dans la gamme d'environ 538 à 1095°C (1000°F à 2000°F), par échange de chaleur indirect.

16. Procédé selon la revendication 1, comportant les étapes qui consistent à faire passer le courant de gaz effluent brut chaud produit dans ladite zone réactionnelle à travers ladite sortie verticale centrale située au fond de ladite zone réactionnelle, tout en dirigeant simultanément au moins un courant de gaz oxydant au niveau de cet orifice, et à faire passer le courant de gaz brut chaud à travers, pour oxyder au moins une partie du fer élémentaire éventuellement contenu dans la scorie en fusion entraînée dans ledit courant de gaz effluent brut chaud et/ou situé sur les parois de ladite sortie.
